# EUROPEAN PATENT SPECIFICATION

(11) **EP 0 588 631 B1**
(45) Date of publication and mention of the grant of the patent: **24.07.2002**
(21) Application number: 93307307.4
(22) Date of filing: 16.09.1993
(51) Int. Cl.: G01K 13/00, A61B 5/00

(54) **Clinical thermometer**
Klinisches Thermometer
Thermomètre médical

(30) Priority: 17.09.1992 JP 24794692
(43) Date of publication of application: 23.03.1994
(73) Proprietor: TERUMO KABUSHIKI KAISHA, Tokyo (JP)
(72) Inventor: Harada, Hideo, Fujinomiya-shi, Shizuoka-ken (JP)
(74) Representative: Harrison, David Christopher

(56) References cited:
- EP-A- 0 461 068
- US-A- 3 581 570
- US-A- 5 018 872

## Description

The present invention relates to a clinical thermometer used in thermometry of the tympanic membrane and, more particularly, to a clinical thermometer utilizing thermal radiation.

Popular conventional clinical thermometers are for contact type measurement such as axillary or oral thermometry. These clinical thermometers do not necessarily reflect core temperatures of the living body. Thermometry involves time restrictions and limitations in terms of thermometric condition, i.e., a rest state, resulting in cumbersome operations.

Since 1960s, tympanic thermometry has received a great deal of attention because it reflects the temperature of the hypothalamus effecting a biological control function. However, there is a danger of causing perforation of the tympanic membrane because a thermocouple or thermistor is directly brought into contact with the tympanic membrane. In addition, thermometry has involved discomfort and pain. Therefore, tympanic thermometry has not progressed beyond physiological studies.

In recent years, attempts at detecting an infrared ray radiated from the tympanic membrane in order to measure tympanic temperature within a short period of time but in a noncontact manner have been made. For example, as disclosed in Japanese Patent Laid-Open No. 61-117422, a noncontact type tympanic thermometer called "First Temp" (tradename) is commercially available from Intelligent Medical Systems, U.S.A.

An infrared sensor used in a clinical thermometer preferably should receive only infrared radiation from the tympanic membrane or the external auditory meatus near the tympanic membrane, which reflects the core temperature of the living body. In a conventional thermometer, the material of a constricted diameter portion of a probe inserted into the external auditory meatus to detect a temperature is rather hard, and the structure has no degree of freedom. An example of such a thermometer is shown in US 5,018,872. It is, therefore, very difficult to receive infrared radiation from the tympanic membrane or the external auditory meatus near the tympanic membrane because to do that the probe would always need to conform to the shape of the complicated external auditory meatus which varies greatly in different individuals. As a result, the conventional clinical thermometer receives infrared radiation from an outer portion of the external auditory meatus away from vicinity of tympanic membrane and the tympanic membrance.

More specifically, the outer portion of the external auditory meatus away from the vicinity of the tympanic membrance does not reflect the core temperature of the living body. The temperature of the external auditory meatus is changed by external air or insertion of the probe of the clinical thermometer. As a result, stable, accurate thermometry cannot be performed and it is very difficult to detect the infrared radiation from the tympanic membrane.

The present invention, therefore, has been made in consideration of the problems described above, and has as its object to provide a clinical thermometer for detecting an infrared ray radiated from substantially a tympanic membrane, and which therefore is capable of always performing stable, accurate thermometry without errors caused by individual differences in shape of the external auditory meatus and variations in thermometric operations. For this reason, it has a constricted probe portion which is deformable upon insertion into the external auditory meatus, and has an infrared sensor adjacent a window at a free end of that constricted diameter portion. So much has been disclosed in US-A-3581570, Figures 11-13.

However, it is an object of the present invention to provide a clinical thermometer which can improve directivity of a sensor for receiving an infrared ray in accordance with deformation of a probe as well as being free from discomfort upon insertion.

EP 0 461 068 discloses a tympanic thermometer comprising a resistive temperature sensor (NTC) fixed to one end of a flexible tube. The other end of the flexible tube is mounted to a holding member.

In order to achieve the above objects of the present invention there is provided a clinical thermometer for converting infrared radiation from a tympanic membrane (40) and/or from an external auditory canal portion (10a) near the tympanic membrane into an electrical signal to perform temperature detection, comprising a substantially cylindrical probe body (22); a deformable constricted diameter portion (30) formed at one end of said probe body (22) and which is for insertion into an external auditory canal so as to conform to the shape of the external auditory canal; and an infrared sensor (34) incorporated in said constricted diameter portion adjacent a window (32) at a free end of the constricted diameter portion, characterized in that the sensor (34) is held at a predetermined position between window member (32) and a holding member (38) extending from the interior of said probe body (22) to the interior of said constricted diameter portion (30), by a support member (39, 38a, 38c) at an end of said holding member (38) closer to the window, said support member being deformable such that, in use, said support member is axially deformed, said axial deformation following deformation of the deformable constricted diameter portion to the shape of the external auditory canal so that the sensor (34) is directed toward the tympanic membrane (40) and/or the external auditory canal portion (10a) near the tympanic membrane. Thus, directivity of the sensor for receiving an infrared ray follows the deformation of the probe.

According to the present invention, a degree of freedom is obtained from the deformable material and from a structure and is exemplified by changes caused by bending, elongation/contraction, reciprocal movement, and back-and-forth movement or the like.

The above structure comprises a means for providing a degree of freedom to the shape of the probe inserted into the external auditory meatus to perform thermometry. When the probe is inserted into the external auditory meatus, it conforms to the shape of the external auditory meatus (which greatly varies depending on different individuals) regardless of the shape of the external auditory meatus or the angle of insertion for that thermometric operation. The distal end of the probe can be guided in the axial direction of the external auditory meatus. The directivity of the sensor for receiving an infrared ray follows the deformation of the probe. Therefore, the probe is directed towards the tympanic membrane to receive the infrared radiation from the tympanic membrane or the external auditory meatus near the tympanic membrane.

In insertion of the probe into the external auditory meatus, the degree of freedom (right-and-left movement, and back-and-forth movement) is provided to the probe of the clinical thermometer. For this reason, shock on the wall surface of the external auditory meatus can be minimized thus relieving pain and discomfort of a patient.

Other features and advantages of the present invention will be apparent from the following description taken in conjunction with the accompanying drawings, in which like reference characters designate the same or similar parts throughout the figures thereof.
Fig. 1 is a sectional view showing the main parts of a non-contact clinical thermometer as used;
Fig. 2A is a view showing the outer appearance of part of a probe portion of a first embodiment of the thermometer according to the invention;
Fig. 2B is a sectional view of a probe portion of a clinical thermometer according to another embodiment of the present invention; and
Fig. 3 is a sectional view showing a probe portion of the first embodiment of the invention.

Preferred embodiments of the present invention will be described with reference to the accompanying drawings.

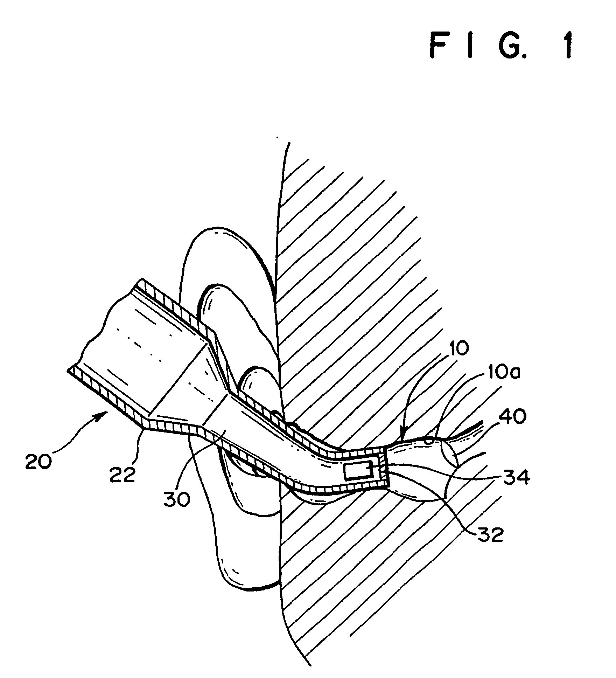

Fig. 1 is a sectional view showing an application state of a probe 20 inserted into an external auditory meatus 10 for thermometry. Referring to Fig. 1, the targeted measurement portion is substantially a tympanic membrane 40 including the external auditory meatus 10a near the tympanic membrane 40. The probe 20 comprises a comparatively thick-walled holder portion 22 and a constricted diameter portion 30 extending from the holder portion 22. A hole or window 32 through which an infrared ray radiated from the tympanic membrane including the external auditory meatus passes is formed in the distal end portion of the constricted diameter portion 30. A compact infrared sensor 34 for receiving an infrared ray R radiated from the tympanic membrane (including the adjacent part of the external auditory meatus) is arranged inside the constricted diameter portion 30. The constricted diameter portion 30 preferably has an almost circular cross-section and is tapered toward the distal end thereof. It is also preferable to arrange the infrared sensor 34 inside the distal end portion of the constricted diameter portion 30 to improve measurement precision.

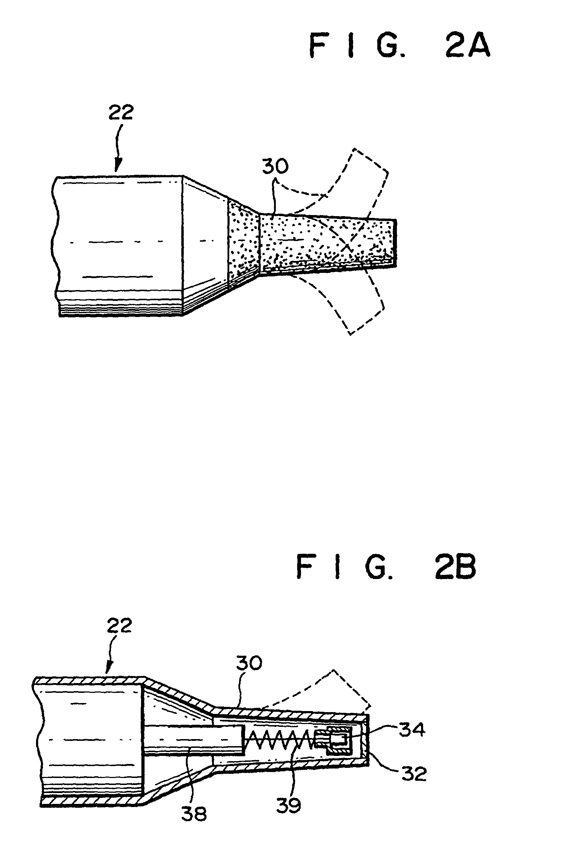

Fig. 2A is a view showing the outer appearance of the probe 20 to be inserted into the external auditory meatus for thermometry of the clinical thermometer of the embodiment shown in Fig. 1. A material such as a flexible material, an extendible material, or a material which is plastic (at body temperature) can be exemplified as a material for forming the constricted diameter portion 30 of the probe 20. For example, an elastomer (e.g., soft vinyl chloride or rubber), sponge, or the like can be used. To increase the degree of freedom a circumferential slit, a bellows, or the like may be preferably formed, depending on the material chosen. Roughnesses such as jogs, ribs, or groves are preferably disposed in the outer surface of distal end portion of the probe 20 so as to decrease the contacted surface between the probe and the external auditory meatus, thus, the heat transfer between the probe and the external auditory meatus is prevented.

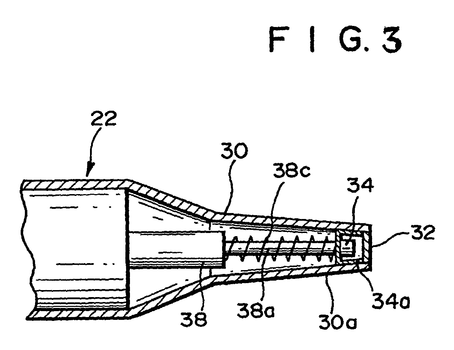

Fig. 3 is a longitudinal sectional view of the probe 20 shown in Fig. 2A. Referring to Fig. 3, the infrared sensor 34 is connected to the distal end of a flexible substrate 38a supported on a rod-like holding member 38. The infrared sensor 34 is disposed in the bottom of a recessed portion 34a made of metal such as copper. The recessed portion 34a is preferably sealed by a window member 32. The flexible substrate 38a is surrounded by a coil spring 38c made of copper, bronze, or the like to improve the bending characteristics of the substrate. The length of the bendable, deformable portion of the constricted diameter portion 30 is preferably up to 12 mm from the distal end of the probe.

It is also preferable to arrange the infrared sensor 34 in or near the distal end portion of the constricted diameter portion 30 to improve the detection precision. The depth of the recessed portion 34a from the bottom thereof to the front of infrared sensor 34 is not enough to interfere with the angle of view of the infrared sensor 34. A ratio of a depth H of the recessed portion 34a to the inner diameter D thereof preferably falls within the range of 0.05 to 1.0.

Thus, the heat distribution during viewing of the tympanic membrane, from areas other then the object, within the angle of view of the infrared sensor 34, can be small. Errors by the practitioner who measures the infrared substantially only from the tympanic membrane can be decreased.

A pulse wave detector for detecting a pulse wave and a biological information detecting means for detecting information other than the body temperature, such as a detector of blood oxygen can be arranged in a peripheral portion 30a of the external auditory meatus insertion portion of the constricted diameter portion 30.

Referring to Fig. 2B, a constricted diameter portion 30 of a probe is made of a flexible material. When the constricted diameter portion 30 is flexed, an infrared sensor 34 is also directed toward the tympanic membrane. For this reason, to increase the heat capacity of the infrared sensor 34, the infrared sensor 39 is supported by an elastic member 39 such as a coil spring supported on a rod-like holding member 38. The infrared sensor 34 is directed toward the tympanic membrane so as to follow the bending of the constriction portion. A ball or universal joint may be used in place of the elastic member 39.

The elastic member 39 preferably has high thermal conductivity so as to transfer backwards the heat which is transferred from the external auditory meatus while detecting the infrared from the tympanic membrane, so as to conserve the strength of the constricted diameter portion 30.

As has been described above, according to the present invention, a probe can be accurately inserted into the external ear, and the sensor of the inserted probe the accurately directed toward the tympanic membrane. Therefore, thermometric errors caused by prior art variations in thermometric methods can be eliminated, and stable, accurate thermometry can always be performed.

A degree of freedom (right-and-left movement, and back-and-forth movement) is provided to the probe of the clinical thermometer. For this reason, a shock on the wall surface of the external auditory meatus upon insertion can be minimized to relieve pain and discomfort to a patient. The probe may be formed as an earphone-type so as to be compact, or as a headphone type so as to be available as part of a monitoring system.

## Claims

1. A clinical thermometer for converting infrared radiation from a tympanic membrane (40) and/or from an external auditory canal portion (10a) near the tympanic membrane into an electrical signal to perform temperature detection, comprising:
a substantially cylindrical probe body (22);
a deformable constricted diameter portion (30) formed at one end of said probe body (22) and which is for insertion into an external auditory canal so as to conform to the shape of the external auditory canal; and
an infrared sensor (34) incorporated in said constricted diameter portion adjacent a window (32) at a free end of the constricted diameter portion, the sensor (34) being held at a predetermined position between said window (32) and a holding member (38) extending from the interior of said probe body (22) to the interior of said constricted diameter portion (30), by a support member (39, 38a, 38c) at an end of said holding member (38) closer to the window, **characterized in that** said window comprises a window member (32) and said support member being deformable such that, in use, said support member is axially deformed, said axial deformation following deformation of the deformable constricted diameter portion to the shape of the external auditory canal so that the sensor (34) is directed toward the tympanic membrane (40) and/or the external auditory canal portion (10a) near the tympanic membrane.

2. The thermometer according to claim 1 wherein said constricted diameter portion is made of a synthetic resin-based soft material.

3. The thermometer according to claim 1 wherein said constricted diameter portion is made of a rubber-based soft material.

4. The thermometer according to claim 1 wherein said thermometer further comprising a biological information detecting means for detecting a pulse wave or blood oxygen, arranged in a peripheral portion (30a) of the end of the constricted portion.

5. The thermometer according to any one of claims 1-4 wherein the support member is of high thermal conductivity.

## Patentansprüche

1. Ein klinisches Thermometer zur Konvertierung von Infrarotstrahlung von einem Trommelfell (40) und/oder von einem externen Gehörgangsbereich (10a) in der Nähe des Trommelfelles in ein elektrisches Signal, um Temperaturdetektionen durchzuführen, mit:
einen im wesentlichen zylindrischen Fühlerkörper (22);
ein verformbaren Bereich mit verengtem Durchmesser (30) an einem Ende des Fühlerkörpers (22) geformt und welches für die Insertion in einen externen Gehörgang, um sich der Form des Gehörganges anzupassen, ist;
einen Infrarotsensor (34), inkorporiert in den Bereich mit verengtem Durchmesser, sich anschließend an ein Fenster (32) an einem freien Ende des Bereiches mit verengtem Durchmesser, der Sensor (34) gehalten an einer vorgegebenen Position zwischen dem Fenster (32) und einem Halteglied (38), sich erstreckend aus dem Inneren des Fühlerkörpers (22) zu dem Inneren des Bereiches mit verengtem Durchmesser (30), durch ein Unterstützungsglied (39, 38a, 38c) an einem Ende des Haltegliedes (38), näher am Fenster, charakterisiert dadurch, daß das Fenster ein Fensterteil (32) enthält und besagtes Unterstützungsglied deformierbar ist, so daß, bei Benutzung, das Unterstützungsglied axial deformiert ist, die axiale Deformation folgend der Deformation des deformierbaren Bereiches mit verengtem Durchmesser zu der Form des externen Gehörganges, so daß der Sensor (34) zum Trommelfell (40) und/oder zu dem externen Gehörgangsteil (10a) in der Nähe des Trommelfells gerichtet ist.

2. Das Thermometer nach Anspruch 1, worin der Bereich mit verengtem Durchmesser aus einem synthetischen harzbasierendem weichen Material gemacht ist.

3. Das Thermometer nach Anspruch 1, worin der Bereich mit verengtem Durchmesser aus einem gummibasierenden weichen Material gemacht ist.

4. Das Thermometer nach Anspruch 1, worin besagtes Thermometer weiterhin ein Mittel zum Erfassen biologischer Informationen zur Detektion einer Pulswelle oder von Blutsauerstoff, angeordnet in einem äußeren Bereich (30a) des Endes des verengten Bereiches.

5. Das Thermometer nach einem der Ansprüche 1-4, worin das Unterstützungsglied von hoher thermischer Leitfähigkeit ist.

## Revendications

1. Thermomètre médical destiné à convertir un rayonnement infrarouge provenant d'une membrane de tympan (40) et/ou d'une partie externe (10a) du conduit auditif à proximité de la membrane du tympan en un signal électrique pour exécuter une détection de température, comprenant :
un corps de sonde essentiellement cylindrique (22);
une partie déformable de diamètre réduit (30) formée sur une extrémité dudit corps de sonde (22) et qui est destinée à être insérée dans un conduit auditif externe de manière à être adaptée à la forme du conduit auditif externe; et
un capteur à infrarouge (34) incorporé dans ladite partie de diamètre réduit adjacente à une fenêtre (32) à une extrémité libre de la partie de diamètre réduit, le capteur (34) étant retenu dans une position prédéterminée entre ladite fenêtre (32) et un élément de retenue (38) s'étendant depuis l'intérieur dudit corps de sonde (22) jusqu'à l'intérieur de ladite partie de diamètre réduit (30), par un élément de support (39,38a,38c) situé à une extrémité dudit élément de retenue (38) plus proche de la fenêtre,
**caractérisé en ce que** ladite fenêtre comprend un élément formant fenêtre (32) et ledit élément de support est déformable de telle sorte qu'en cours d'utilisation ledit élément de support est déformé axialement, ladite déformation axiale apparue à la suite de la déformation de la partie de diamètre réduit suivant la forme du conduit auditif externe de sorte que le capteur (34) est dirigé vers la membrane du tympan (40) et/ou la partie externe (10a) du conduit auditif à proximité de la membrane du tympan.

2. Thermomètre selon la revendication 1, dans lequel ladite partie de diamètre réduit est formée d'un matériau mou à base de résine synthétique.

3. Thermomètre selon la revendication 1, dans lequel ladite partie de diamètre réduit est formée d'un matériau mou à base de caoutchouc.

4. Thermomètre selon la revendication 1, dans lequel ledit thermomètre comporte en outre des moyens de détection d'une information biologique pour détecter une onde impulsionnelle ou l'oxygène du sang, disposée dans une partie périphérique (30a) de l'extrémité de la partie de taille réduite.

5. Thermomètre selon l'une quelconque des revendications 1 à 4, dans lequel l'élément de support possède une conductivité thermique élevée.
